# EUROPÄISCHE PATENTSCHRIFT

(11) **EP 2 078 614 B1**
(45) Veröffentlichungstag und Bekanntmachung des Hinweises auf die Patenterteilung: **04.06.2014**
(21) Anmeldenummer: 09150095.9
(22) Anmeldetag: 06.01.2009
(51) Int. Cl.: B41M 5/26, C03C 17/22, C03C 23/00

(54) **Pigmentschicht und Verfahren zur dauerhaften Beschriftung eines Substrats mittels energiereicher Strahlung**
Pigment layer and method for long-term inscription of a substrate with high-energy radiation
Couche de pigment et procédé de marquage durable d'un substrat à l'aide d'un rayonnement riche en énergie

(30) Priorität: 11.01.2008 DE 102008004130; 28.05.2008 DE 102008025583
(43) Veröffentlichungstag der Anmeldung: 15.07.2009
(73) Patentinhaber: TESA SE, 20253 Hamburg (DE)
(72) Erfinder: Koops, Arne, 23881, Neu-Lankau (DE); Reiter, Sven, 22049, Hamburg (DE); Stähr, Jochen, 25524, Itzehoe (DE)

(56) Entgegenhaltungen:
- EP-A- 1 075 963
- DE-A1- 10 213 110
- JP-A- 2 271 919
- US-A- 4 753 504
- US-A- 5 120 383
- US-A1- 2004 048 175
- US-B1- 6 313 436
- ZERGIOTI I ET AL: "Growth of TIB2 and TiC coatings using pulsed laser deposition" THIN SOLID FILMS, ELSEVIER-SEQUOIA S.A. LAUSANNE, CH, Bd. 303, Nr. 1-2, 15. Juli 1997 (1997-07-15), Seiten 39-46, XP004087610 ISSN: 0040-6090
- Journal of Vacuum Science & Technology A (Vacuum, Surfaces, and Films) AIP for American Vacuum Soc USA, Bd. 15, Nr. 4, 1997, Seiten 1943-1950, XP002525286 ISSN: 0734-2101
- D'ANNA E ET AL: "Titanium carbide film deposition on silicon wafers by pulsed KrF laser ablation of titanium in low-pressure CH4 and C2H2 atmospheres" THE EUROPEAN PHYSICAL JOURNAL APPLIED PHYSICS, Bd. 28, 2004, Seiten 159-163, XP002525287
- FOURTH INTERNATIONAL CONFERENCE ON LASER ABLATION 21-25 JULY 1997 MONTEREY BAY, CA, USA, Bd. 127-129, 1998, Seiten 601-605, XP002525288 Applied Surface Science Elsevier Netherlands ISSN: 0169-4332

## Beschreibung

Die Erfindung betrifft eine Pigmentschicht gemäß dem Oberbegriff von Anspruch 1 und ein Verfahren zur dauerhaften Beschriftung eines Substrats, insbesondere von Glas, mittels energiereicher Strahlung.

Zur Kennzeichnung von Bauteilen an Fahrzeugen, Maschinen, elektrischen und elektronischen Geräten oder von Teilen, die beispielsweise aus Glas bestehen, finden unter anderem technische Etiketten Verwendung, so als Typenschilder, als Steueretiketten für Prozessabläufe sowie als Garantie- und Prüfplaketten. Die Kennzeichnung mittels Laseretiketten und bedruckter oder lackierter Metallschilder besitzt insbesondere für hochwertige Markierungen einen zunehmenden Stellenwert. Auf diese Weise werden Informationen und Hinweise für den späteren Nutzer auf verschiedensten Teilen platziert.

Daneben können diese Informationen auch dadurch sichergestellt werden, dass die Beschriftung direkt auf dem zu beschriftenden Gut erfolgt. Insbesondere zur direkten Beschriftung und Kennzeichnung von Metallen oder Glas sind verschiedene Beschriftungsverfahren bekannt. Beispielsweise kann eine Beschriftung mittels Materialauftrag, wie mit Farbe, oder auch mit einem Materialabtrag, wie bei einer Gravur, erfolgen.

Die Beschriftung von Etiketten oder die Direktbeschriftung kann beispielsweise in Form eines 1-D- oder 2-D-Barcodes erfolgen. Durch ein geeignetes Lesegerät erhält man die Möglichkeit, Informationen über das beschriftete Gut oder dessen Inhalt durch den Barcode auszulesen. Neben diesen Standardinformationen werden häufig aber auch sensible Sicherheitsdaten in der Beschriftung platziert. Im Falle von Diebstahl, Unfall oder Gewährleistung sind diese Informationen für eine Rückverfolgung von Gut und Inhalt von großer Bedeutung.

Insbesondere zur Direktbeschriftung sind leistungsfähige steuerbare Laser zum Einbrennen von Markierungen wie alphanumerischer Kennzeichnungen, Codierungen und dergleichen verbreitet. An das zu beschriftende beziehungsweise das zur Beschriftung eingesetzte Material sowie das Beschriftungsverfahren werden dabei unter anderem folgende Anforderungen gestellt:
- Das Material soll schnell beschriftbar sein.
- Es soll ein hohes räumliches Auflösungsvermögen erreicht werden.
- Material und Beschriftungsverfahren sollen in der Anwendung möglichst einfach sein.
- Bei der Beschriftung ggf. entstehende Zersetzungsprodukte sollen nicht korrosiv wirken.
- Das Beschriftungsverfahren soll keinen oder nur geringen Einfluss auf die mechanische Stabilität des Bauteils besitzen.

Darüber hinaus gelten in Einzelfällen in Abhängigkeit von dem jeweiligen Einsatzgebiet, zusätzliche Anforderungen wie die Folgenden:
- Die mittels Bestrahlung hergestellten Zeichen sollen so kontrastreich sein, dass sie auch unter ungünstigen Bedingungen, beispielsweise über größere Entfernungen, fehlerfrei gelesen werden können.
- Die Beschriftung soll eine hohe Temperaturbeständigkeit aufweisen, beispielsweise bis über 200 °C.
- Die Beschriftung soll eine hohe Beständigkeit gegenüber äußeren Einflüssen, wie Wettereinflüssen, Wasser und/oder Lösungsmittel, aufweisen.

Falls Beschriftungen nicht mit einem (Laser)Etikett auf das Bauteil aufgebracht werden sondern mittels eines direkten Aufdrucks, besteht für Dritte leicht die Möglichkeit, die Beschriftung abzuwaschen oder abzurubbeln. Auch reicht oft das einfache Reiben des beschrifteten Gegenstands an einem zweiten Gegenstand, zum Beispiel einer Verpackung, um die die einzelnen Buchstaben oder Ziffern zu schwächen.

Typischerweise werden Glasoberflächen mit der konventionellen Sandstrahltechnik und Lasergravur gekennzeichnet. Die resultierende Kennzeichnung besitzt einen geringen Kontrast und wird durch Abtragen von Glasmaterial erzeugt, welches mit einer mechanischen Stabilitätsveränderung einhergeht.

Ferner ist die Materialverdampfung mittels eines Lasers bekannt und wird als LTF-Verfahren (Lasertransferfilm) oder als PLD (Pulsed Lasers Deposition) bezeichnet. Bei beiden Verfahren kommt es zu einer Abscheidung des verdampften Materials auf dem Zielsubstrat. Dabei bildet sich eine chemisch-physikalische Bindung des verdampften Materials an dem Zielsubstrat aus.

Aus der DE 101 52 073 A ist ein Lasertransferfilm zum dauerhaften Beschriften von Bauteilen bekannt. Dieser Lastertransferfilm weist eine Trägerschicht auf, auf deren unteren Seite eine Klebeschicht zumindest partiell vorhanden ist. Ferner ist auf der Trägerschicht und/oder der Klebeschicht zumindest partiell eine Pigmentschicht aufgetragen, die ein lasersensibles Pigment enthält. Geeignete Pigmente sind beispielsweise Farbpigmente und Metallsalze. Insbesondere finden Pigmente der Firma Thermark Anwendung, zum Beispiel Thermark 120-30F, bei denen es sich um Metalloxide, zum Beispiel Molybdäntrioxid handelt. Des Weiteren können Mischungen mehrerer Pigmente oder Abmischungen von Pigmenten und Glaspartikeln, wie sie bei der Firma Merck und Ferro Inc. erhältlich sind, eingesetzt werden, die zu einem Sinterungsprozess führen können. Weiterhin sind verschiedene Pigmente der Firma Merck (beispielsweise die Perlglanzpigmente EM 143220 und BR 3-01) geeignet. Zudem kann das lasersensible Pigment auch zusätzlich zu dem Additiv Titandioxid verwendet werden.

In der DE 102 13 110 A1 wird ein mehrschichtiger Lasertransferfilm zum dauerhaften Beschriften von Bauteilen aus zumindest einer Trägerschicht beschrieben, auf der en unterer Seite wiederum eine erste Klebeschicht zumindest partiell vorhanden ist. Ferner sind auf dieser Seite der Trägerschicht, auf der sich die erste Klebeschicht befindet, nunmehr wenigstens zwei Pigmentschichten vorhanden. Vorzugsweise handelt es sich um eine zumindest partiell aufgetragene erste Pigmentschicht, die zumindest ein Glasflusspigment enthält, und um eine zumindest partiell aufgetragene zweite Pigmentschicht, die zumindest ein lasersensibles Pigment enthält. In einer vorteilhaften Ausführungsform enthält die erste Pigmentschicht ein Glasflusspigment und einen Absorber und/oder die zweite Pigmentschicht ein Glasflusspigment, einen Absorber und ein lasersensibles Pigment.

Auch die DE 102 13 111 A1 beschreibt einen mehrschichtigen Lasertransferfilm zum dauerhaften Beschriften von Bauteilen aus zumindest einer Trägerschicht, wobei auf der unteren Seite der Trägerschicht eine erste Klebeschicht zumindest partiell vorhanden ist. Auf der Seite der Trägerschicht, auf der sich die erste Klebeschicht befindet, sind ebenfalls wenigstens zwei ein lasersensibles Pigment enthaltende Pigmentschichten zumindest partiell vorhanden. Die Konzentration des lasersensiblen Pigments innerhalb der Pigmentschichten unterscheidet sich jedoch voneinander.

Die US 6,313,436 B beschreibt ein wärmeaktiviertes chemisches Markierungsverfahren, bei dem eine Schicht gemischten Metalloxides an einem Metallsubstrat angebracht wird. Diese Schicht enthält einen Energieabsorptions-Verstärker. Nach dem Anbringen wird die Schicht mit einem Energiestrahlbündel in Übereinstimmung mit der Gestalt der Markierung, die angebracht werden soll, bestrahlt. Das Energiestrahlbündel weist dabei eine auf den Energieabsorptions-Verstärker abgestimmte Wellenlänge auf, so dass dieser angeregt wird und auf dem Substrat eine Markierungsschicht ausgebildet wird.

Die US 2004/0048175 A1 offenbart ein Beschriftungsverfahren mit einem Laser, ohne dass eine Kombination aus Polymermatrix, Titanspender und Kohlenstoffspender erwähnt wird.
Die US 5,120,383 A beschreibt ein Thermotransferfarbband aus mehreren Schichten, bei dem der Kohlenstoffspender und der Titanspender in unterschiedlichen Schichten und somit räumlich getrennt voneinander vorliegen.
Aus der EP 1 075 963 A2 ist eine Thermotransferfolie bekannt, die eine Substratschicht (a) mit einer Polymermasse sowie eine Donorschicht (b) umfasst, in der Ruß enthalten sein kann.
Die US 4,753,504 A zeigt eine Spiegel-Struktur für Laserdrucker, die ein hohes Reflexionsvermögen im nahen infraroten Wellenlängenbereich aufweist. Die Spiegelstruktur umfasst eine Reflexionsschicht auf einem Substrat. Die Reflexionsschicht besteht aus einer Mischung aus Titannitrid und Titancarbid.
In dem Artikel "Growth of TiB2 and TiC coatings using pulsed laser deposition" von Zergioti et al, Thin Solid Films, 303 (1997), Seiten 39 bis 46 beschreibt eine indirekte Beschichtung von Oberflächen mittels Titancarbid dazu wird bereits vorhandenes Titancarbid mittels "vapor deposition" auf ein Substrat übertragen.

Grundsätzlich können durch eine Energieeinstrahlung, Insbesondere eine Laserstrahl-Material-Wechselwirkung verschiedene Effekte erzeugt werden. Die Werkstoffbearbeitung beruht dabei auf der thermischen Einwirkung, die aus der Umwandlung der eingestrahlten Energie (Strahlungsenergie) in Wärme entsteht. Maßgeblich für die Werkstoffbearbeitung ist dabei der vom Material absorbierte Anteil der Intensität, wobei Reflexionsgrad und Absorptionsgrad von der eingestrahlten Wellenlänge und dem Werkstoff selbst abhängig sind. Da die meisten zu bearbeitenden Werkstoffe gute Wärmeleiter sind, verteilt sich die eingestrahlte Energie sehr rasch und es entsteht eine kleine Streuung von Wärme um den bestrahlten Laserpunkt. Dieser Effekt wird bei Metallen zur Anlassbeschriftung eingesetzt, indem durch die gezielte Erhitzung eine Gefügeänderung des Metalls durch Oxidation eine Verfärbung ergibt. Die Färbung hängt von der erreichten Maximaltemperatur in der Grenzschicht ab. So können, je nach Laserparameter, hellere und dunklere Anlassfarben kreiert werden. Dagegen ist das Absorptionsverhalten von Kunststoffen mäßig und wird weitgehend von Füllstoffen, Verarbeitungshilfsmitteln, Additiven, Farbstoffen, Pigmente und der Oberflächenbeschaffenheit bestimmt. Ein Kunststoff als schlechter Wärmeleiter kann auf eine Laser-Strahlung mit einem Schmelzen, Aufschäumen, Ausbleichen, Verfärben und Gravur reagieren. Besonders bei Thermoplasten und Elastomeren wird ein Schmelzprozess bei Laser-Strahlung erzeugt, da mehr Laserleistung absorbiert wird als durch Wärmeleitung abtransportiert werden kann. Es kommt zu einer lokalen Überhitzung in Form einer Verflüssigung oder oberhalb einer kritischen Intensität sogar zu einer Verdampfung des Kunststoffwerkstoffs. Eine Schmelze eignet sich jedoch nur begrenzt zur dauerhaften Markierung von Substraten.

Aufgabe der vorliegenden Erfindung ist es, eine Pigmentschicht zur dauerhaften Beschriftung von Substraten, insbesondere von Glas, zu schaffen, die ein schnelles und präzises Beschriften ermöglicht und dabei die Fälschungssicherheit erhöht. Zudem soll die Beschriftung bauteilschonend erfolgen, nicht zerstörungsfrei ablösbar sein und dennoch einen hohen Kontrast, ein hohes Auflösungsvermögen und eine hohe Temperaturbeständigkeit ermöglichen.

Gelöst wird diese Aufgabe bei einer Pigmentschicht mit den Merkmalen des Oberbegriffs von Anspruch 1 durch die Merkmale des kennzeichnenden Teils von Anspruch 1. Eine nebengeordnete Lösung beschreibt ein Verfahren gemäß Anspruch 15. Vorteilhafte Ausgestaltungen und Weiterbildungen sind Gegenstand der jeweiligen Unteransprüche.

Demgemäß betrifft die Erfindung eine Pigmentschicht zur dauerhaften Markierung eines Substrats, insbesondere von Glas, basierend auf einer Polymermatrix. Neben der Polymermatrix enthält die Pigmentschicht als weiteren Bestandteil einen Titanspender. Als Titanspender wird dabei reines Titan oder eine Titanverbindung bezeichnet, das bzw. die eine Affinität hat, unter Energieeinwirkung jedenfalls kurzzeitig freies Titan als Reaktionspartner bereitzustellen. Ggf. kann die Bereitstellung des freien Titans auch über den Weg eines titanhaltigen Zwischenprodukts erfolgen. Ferner ist ein Kohlenstoffspender vorgesehen, also ein Material das unter Energieeinstrahlung freien, also chemisch nicht gebunden, Kohlenstoff bereitstellt. Hierbei kann es sich um eine zu der Polymermatrix zusätzliche Kohlenstoffverbindung handeln, ggf. kann aber auch die Polymermatrix selbst als Quelle freien Kohlenstoffs ausreichend sein.

Für die vorliegende Erfindung ist wesentlich, dass die Polymermatrix unter Bestrahlung mit energiereicher Strahlung, wie zum Beispiel Laserstrahlung, mit Pulverisierung reagiert. Während der Pulverisierung wird freier Kohlenstoff gebildet sowie die Titanverbindung aufgespalten. Als Markierung wird dabei eine neue Titanverbindung, insbesondere Titancarbid auf dem zu markierenden Substrat abgeschieden. Bei einer ausreichend hohen Konzentration freien Kohlenstoffs wird dieser zudem in der neuen Titanverbindung eingelagert, wodurch der Kontrast der Markierung gezielt beeinflusst werden kann.

Diese laserinduzierte Pulverisierung wird vorzugsweise bei spröden Werkstoffen erzielt. Bei genügend hoher Leistung bildet sich in Verbindung mit einem Plasma eine Dampfkapillare aus. Durch die Kapillare nimmt die Absorption wesentlich höhere Werte an, so dass die Laserstrahlung tiefer in das Material eindringen kann und den Kunststoff partikelförmig um die Wärmeeinflusszone explosionsartig aus der Matrix herausschleudern kann. Dieser Effekt kann optimal zur Herstellung des Transfermaterials genutzt werden, indem diese Kapillare als Reaktandenraum dient sowie das entstandene Pulver als Titan- und Kohlenstoffspender zur Synthese des Titancarbids umgesetzt wird.

Als Polymermatrix wird vorliegend jede Matrix basierend auf polymeren Bestandteilen bezeichnet. Neben den polymeren Bestandteilen kann die Matrix auch beliebige nicht polymere Bestandteile enthalten, lediglich der Hauptbestandteil sollte polymerer Art sein. Insbesondere bezeichnet der Begriff "Polymermatrix" auch eine Mischung von Grundpolymeren. In besonders bevorzugter Ausgestaltung handelt es sich bei der Polymermatrix um eine duroplastische Polymermatrix. Es hat sich gezeigt, dass insbesondere Duroplaste besonders geeignet sind, um eine Pulverisierung zu erzielen.

In bevorzugter Ausgestaltung ist vorgesehen, dass die Pigmentschicht frei von unter Energieeinstrahlung aufschmelzenden Kunststoffen, insbesondere auch frei von anderen aufschmelzenden Materialien, ausgebildet ist. Hierdurch kann einerseits der Produktaufbau möglichst einfach gehalten werden, zum anderen wird eine Beschriftung nicht durch das Schmelzen von Kunststoff oder anderen Materialien beeinträchtigt. Zudem kann bei der vorliegenden Pigmentschicht auch auf eine Glasfritte als Bestandsteil verzichtet werden. Überraschenderweise hat sich gezeigt, dass eine dauerhafte Bindung der Markierung insbesondere an Glas auch ohne eine Glasfritte erzielt wird.

Nach einer ersten vorteilhaften Ausgestaltung der Erfindung ist die Titanverbindung Titandioxid, vorzugsweise in Rutil-Struktur. Bei der Rutil-Struktur handelt es sich um eine der vier Kristallmodifikationen von Titandioxid, wie sie aus der Fachliteratur bekannt ist. Die Titandioxid-Pigmente in Rutil-Struktur haben eine Brechzahl von n = 2,75 und absorbieren Anteile des sichtbaren Lichtes bereits bei Wellenlängen um 430 nm. Sie weisen eine Härte von 6 bis 7 auf.

In weiter bevorzugter Ausgestaltung weist die Pigmentschicht Ruß oder Graphit zur Bereitstellung des für die Synthese von Titancarbid notwendigen freien Kohlenstoffs auf. Der Ruß spaltet unter Energieeinstrahlung, insbesondere unter Lasereinstrahlung auf und bildet dabei freien Kohlenstoff. Des Weiteren kann der freie Kohlenstoff auch aus der unter Energieeinwirkung, insbesondere durch Laserbestrahlung, zersetzten, verdampften, oxydierten, depolymerisierten und/oder pyrolysierten Polymermatrix stammen.

Vorzugsweise wird neutraler Ruß mit einem pH-Wert von 6 bis 8 verwendet. Dies ist insbesondere im Hinblick auf eine einfache Handhabung und zur Vermeidung spezieller Sicherheitsvorschriften im Umgang mit sauren oder basischen Materialen bevorzugt. Bevorzugt kommen vorwiegend Thermalruß, Acetylenruß und Flammruß in Frage. Besonders bevorzugt wird Flammruß. Der pH-Wert von Flammruß liegt üblicherweise bei 7 bis 8, von Thermalruß bei 7 bis 9 und von Acetylenruß bei 5 bis 8. Der pH-Wert von Furnacerußen liegt üblicherweise bei 9 bis 11, d.h. diese sind stark basisch. Der pH-Wert oxidierter Gasruße liegt üblicherweise bei 2,5 bis 6, d.h. diese sind sauer. Die Verwendung derartiger saurer oder basischer Ruße ist jedoch grundsätzlich nicht ausgeschlossen.

Die genannten Pigmentruße sind außerordentlich beständig gegen Chemikalien und zeichnen sich durch hohe Lichtechtheit und Witterungsbeständigkeit aus. Aufgrund der sehr hohen Farbtiefe und Farbstärke sowie anderer spezifischer Eigenschaften sind Pigmentruße die am häufigsten eingesetzten Schwarzpigmente. Die technische Herstellung von Pigmentrußen erfolgt durch thermisch-oxidative beziehungsweise thermische Spaltung von Kohlenwasserstoffen. Pigmentruße werden fast ausschließlich nach den aus der Literatur bekannten Furnaceruß-, Degussa-Gasruß- oder Flammruß-Verfahren hergestellt.

Nach einer weiteren vorteilhaften Ausgestaltung der Erfindung ist die Polymermatrix eine strahlengehärtete Polymermatrix. Die Polymermatrix besteht vorteilhaft aus einem Lack, insbesondere aus einem gehärteten Lack, vorzugsweise einem strahlengehärteten Lack, besonders vorzugsweise aus einem elektronenstrahlengehärteten aliphatischen, difunktionellen Polyurethanacrylat-Lack. In einer alternativen Ausführungsform besteht die Polymermatrix aus Polyesteracrylat. Dieser gehärtete Lack weist eine sehr hohe Härte wie auch eine hohe Sprödigkeit auf.

Grundsätzlich sind vier Lacktypen vorteilhaft für die Polymermatrix verwendbar, sofern ihre Stabilität ausreicht, zum Beispiel säurehärtende Alkydmelaminharze, additionsvernetzende Polyurethane, radikalisch härtende Styrollacke und ähnliche. Besonders vorteilhaft sind jedoch strahlenhärtende Lacke, da sie sehr schnell ohne langwieriges Verdampfen von Lösungsmitteln oder Einwirken von Wärme aushärten. Solche Lacke sind zum Beispiel von A. Vrancken beschrieben worden (Farbe und Lack 83,3 (1977) 171).

Gemäß einer besonders vorteilhaften Ausführungsform der Erfindung weist die Pigmentschicht die folgende Zusammensetzung auf:

| | |
|---|---|
| 100 phr | Polymermatrix, insbesondere ein strahlengehärteter aliphatischer, difunktioneller Polyurethanacrylat, |
| 0,2 phr bis 2,5 phr | Ruß und |
| 45 phr bis 65 phr | Titandioxid. |

"phr" bedeutet dabei "parts per hundred resin", eine in der Polymerindustrie gebräuchliche Einheit zur Charakterisierung von Mischungszusammensetzungen, wobei alle polymeren Bestandteile (hier also die Polymermatrix) zu 100 phr gesetzt werden.

Weiter vorzugsweise ist die Zusammensetzung wie folgt:

| | |
|---|---|
| 100 phr | Polymermatrix, insbesondere ein strahlengehärteter aliphatischer, difunktioneller Polyurethanacrylat, |
| 0,4 phr | Ruß und |
| 63,2 phr | Titandioxid. |

Die Dicke der Pigmentschicht liegt vorteilhaft in einem Bereich von etwa 20 µm bis etwa 500 µm, insbesondere in einem Bereich von etwa 30 µm bis etwa 100 µm, um die an sie gestellten Anforderungen hervorragend zu erfüllen.

Zur Optimierung der Eigenschaften kann die Pigmentschicht mit einem oder mehreren Additiven wie Weichmachern, Füllstoffen, Pigmenten, UV-Absorbern, Lichtschutz-, Alterungsschutzmitteln, Vernetzungsmitteln, Vernetzungspromotoren oder Elastomeren abgemischt sein.

Beim Auftreffen des energiereichen Strahlung, insbesondere eines Laserstrahls, wird die Pigmentschicht im Wesentlichen in kleinen Teilchen im Bereich des Auftreffpunkts abgesprengt, so dass der mit dem Laser erzeugte pulverisierte Abbrand der Pigmentschicht eine zahlenmittlere Teilchengröße von 0,5 µm bis 2,0 µm aufweist.

Bei Einstrahlung von energiereicher Strahlung wie Laserstrahlung, beispielsweise als Laserpuls, tritt die Strahlung beziehungsweise das Laserlicht direkt in Kontakt oder in Wechselwirkung mit der Pigmentschichtoberfläche und führt zu einer Pulverisierung der Polymermatrix. Im Falle eines Laserstrahls wird dieser durch Absorption in das Material eingekoppelt. Die Absorption hat die Auswirkung, dass Material verdampft wird, Partikel aus der Pigmentschicht herausgeschlagen werden und es zu einer Plasmabildung kommen kann. Besonders an den Rändern der Laserstrahlexposition treten thermische Schmelzprozesse auf.

Typischerweise werden langkettige Polymerbestandteile der Pigmentschicht bei Umwandlung der eingestrahlten Energie in Wärme aufgespalten, und es entsteht unter anderem durch thermisches Cracken elementarer Kohlenstoff. Zusammenfassend partikuliert/verdampft/zersetzt sich die Polymermatrix durch den hohen Energieeintrag.

Dieser Kohlenstoff schlägt sich in Form von Titaniumcarbid auf dem zu beschriftenden Gut nieder. Die Emissionsbestandteile bei der Beschriftung sind damit der elementar vorliegende Kohlenstoff, das TiO₂ und die Crackprodukte aus der Polymermatrix der Pigmentschicht. Folgende Reaktion vermag den Vorgang widerzuspiegeln, die als carbothermische Synthesereaktion zur Herstellung von Titancarbid beschrieben werden kann.

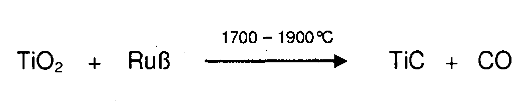

Der Energieeintrag wird durch den Wechselwirkungskoeffizienten der Reaktanten, insbesondere deren Absorptionsverhalten, sowie die Art der Strahlung und die Parametrierung der Strahlungsquelle bestimmt. Nach Auswahl der geeigneten Strahlungsquelle, insbesondere eines Lasers, wird die Steuerung vorwiegend über die Strahlungsleistung und die Beschriftungsgeschwindigkeit vorgenommen.

Titaniumcarbid (auch als Titancarbid - TiC bezeichnet) gehört zu den Nichtoxidkeramiken. Nichtoxidkeramiken zeichnen sich durch höhere kovalente und geringe ionische Bindungsanteile mit hoher chemischer und thermischer Stabilität gegenüber den Silikat- und Oxidkeramiken aus. Technisches Titancarbid enthält um etwa 19,5 Massen-% gebundenen und bis zu 0,5 Massen-% ungebundenen, so genannten freien Kohlenstoff. Der theoretische stöchiometrische Kohlenstoffgehalt liegt bei 20,05 Massen-%.

| Titancarbidverbindung (TiC) weist die folgenden Eigenschaften auf: | |
|---|---|
| Farbe: | grau-metallisch |
| Schmelzpunkt: | 3157 °C |
| Dichte: | 4,93 g/cm³ |
| Kristallstruktur: | kubisch, besitzt dichteste Kugelpackung, beim Auffüllen aller |
| | Oktaederlücken: TiC |

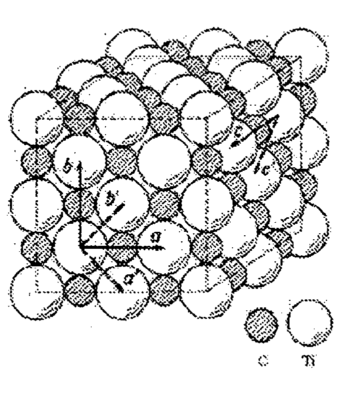

Insbesondere verbinden sich mit Titancarbid folgende Eigenschaften/Vorteile:
- eine relativ hohe Härte und damit Abrieb- und Verschleißfestigkeit
- eine sehr hohe Hitzebeständigkeit
- Korrosionsbeständigkeit
- eine gute Biokompatibilität
- ferroelektrische Eigenschaften
- eine niedrige Wärmeleitfähigkeit (bei hohem Kohlenstoffanteil)
- elektrische Halbleitung
- Beständigkeit gegenüber kalten Säuren und Laugen

Aufgrund der Bildung von Einlagerungsverbindungen oder interstitiellen Verbindungen (Besetzung von Zwischengitterplätzen), können kleine Kohlenstoffatome auf Zwischengitterplätzen oder Lücken des Kristallgitters eingelagert werden, die dann dem Titancarbid eine schwarze Farbe geben. Daraus resultiert letztendlich eine kontrastreiche schwarze Beschriftung auf dem zu beschriftenden Substrat.

Mit anderen Worten, die sehr kontrastreiche Beschriftung auf dem zu beschriftenden Substrat entsteht dadurch, dass sich Titancarbid auf dem Substrat niederschlägt, wobei in die Lücken des Kristallgitters freie Kohlenstoffatome eindringen, die beispielsweise aus dem Ruß oder aus gecracktem elementaren Kohlenstoff aus der Polymermatrix stammen.

Gemäß einer weiteren vorteilhaften Ausführungsform der Erfindung ist die Pigmentschicht partiell oder vollflächig mit einer insbesondere druckempfindlichen Klebemasse beschichtet. Eine derartige Ausgestaltung ist besonders vorteilhaft, um eine einfache Anwendung der Pigmentschicht zu ermöglichen. Mittels der so gebildeten (partiellen) Klebeschicht kann die Pigmentschicht auf einfache Weise während des Beschriftungsverfahrens auf dem zu markierenden Substrat festgelegt werden, ohne dass die Gefahr einer Verschiebung der Pigmentschicht besteht.

Insbesondere kann die Klebeschicht in Form von Dots oder im Siebdruck aufgebracht sein, gegebenenfalls auch als Randbedruckung, so dass die Pigmentschicht in beliebiger Art und Weise auf dem Untergrund verklebt werden kann.

Vorzugsweise handelt es sich bei der Klebemasse um Haftkleber. Die Pigmentschicht wird ein- oder beidseitig mit dem bevorzugten Haftkleber als Lösung oder Dispersion oder 100 %ig (zum Beispiel aus der Schmelze) beschichtet. Die Klebeschicht(en) können durch Wärme oder energiereiche Strahlung vernetzt und erforderlichenfalls mit Trennfolie oder Trennpapier abgedeckt werden. Geeignete Haftkleber sind bei D. Satas, Handbook of Pressure Sensitive Adhesive Technology (Van Nostrand Reinhold) beschrieben.

Insbesondere sind Haftkleber auf Basis Acrylat, Naturkautschuk, thermoplastischem Styrolblockcopolymer oder Silikon geeignet.

Zur Optimierung der Eigenschaften kann die zum Einsatz kommende Selbstklebemasse mit einem oder mehreren Additiven wie Klebrigmachern (Harzen), Weichmachern, Füllstoffen, Pigmenten, UV-Absorbern, Lichtschutz-, Alterungsschutzmitteln, Vernetzungsmitteln, Vernetzungspromotoren oder Elastomeren abgemischt sein. Die Abstimmung der Klebemasse richtet sich insbesondere nach dem Einsatzzweck, also der Art des Klebeuntergrunds, der voraussichtlichen Klebedauer, den Umweltbedingungen etc.

Geeignete Elastomere zum Abmischen sind zum Beispiel EPDM- oder EPM-Kautschuk, Polyisobutylen, Butylkautschuk, Ethylen-Vinylacetat, hydrierte Blockcopolymere aus Dienen (zum Beispiel durch Hydrierung von SBR, cSBR, BAN, NBR, SBS, SIS oder IR, solche Polymere sind zum Beispiel als SEPS und SEBS bekannt) oder Acrylatcopolymere wie ACM.

Geeignete Klebrigmacher sind beispielsweise Kohlenwasserstoffharze (zum Beispiel aus ungesättigten C₅- oder C₇-Monomeren), Terpenphenolharze, Terpenharze aus Rohstoffen wie α- oder β-Pinen, aromatische Harze wie Cumaron-Inden-Harze oder Harze aus Styrol oder α-Methylstyrol wie Kolophonium und seine Folgeprodukte wie disproportionierte, dimerisierte oder veresterte Harze, wobei Glycole, Glycerin oder Pentaerythrit eingesetzt werden können, sowie weitere wie aufgeführt in Ullmanns Enzyklopädie der technischen Chemie, Band 12, Seiten 525 bis 555 (4. Auflage), Weinheim. Besonders geeignet sind alterungsstabile Harze ohne olefinische Doppelbindung wie zum Beispiel hydrierte Harze.

Geeignete Weichmacher sind beispielsweise aliphatische, cycloaliphatische und aromatische Mineralöle, Di- oder Poly-Ester der Phthalsäure, Trimellitsäure oder Adipinsäure, flüssige Kautschuke (zum Beispiel Nitril- oder Polyisoprenkautschuke), flüssige Polymerisate aus Buten und/oder Isobuten, Acrylsäureester, Polyvinylether, Flüssig- und Weichharze auf Basis der Rohstoffe zu Klebharze, Wollwachs und andere Wachse oder flüssige Silikone.

Geeignete Vernetzungsmittel sind beispielsweise Phenolharze oder halogenierte Phenolharze, Melamin- und Formaldehydharze. Geeignete Vernetzungspromotoren sind zum Beispiel Maleinimide, Allylester wie Triallylcyanurat, mehrfunktionelle Ester der Acryl- und Methacryläure.

Die Beschichtungsstärke mit Klebemasse liegt vorzugsweise im Bereich von etwa 5 g/m² bis etwa 100 g/m², insbesondere von etwa 10 g/m² bis etwa 25 g/m².

Weiter vorzugsweise ist die Pigmentschicht auf einem Träger, vorzugsweise auf einer Trägerfolie aufgebracht. Die Aufbringung erfolgt vorteilhaft durch eine Beschichtung der Pigmentschicht auf den Träger.

Als Trägerfolie lassen sich vorzugsweise Folien einsetzen, die transparent sind, insbesondere monoaxial und biaxial gereckte Folien auf Basis von Polyolefinen, Folien auf Basis von gerecktem Polyethylen oder gereckten Copolymeren, enthaltend Ethylen-und/oder Polypropyleneinheiten, gegebenenfalls auch PVC-Folien und/oder Folien auf Basis von Vinylpolymeren, Polyamiden, Polyester, Polyacetalen, Polycarbonaten. Auch PET-Folien sind hervorragend als Träger geeignet. Auch Folien auf Basis von gerecktem Polyethylen oder gereckten Copolymeren, enthaltend Ethylen- und/oder Polypropyleneinheiten, sind als Trägerfolie geeignet.

Weiter bevorzugt sind einschichtige, biaxial oder monoaxial gereckte Folien und mehrschichtige, biaxiale oder monoaxiale Folien auf Basis von Polypropylen. Folien auf Basis von Hart-PVC können ebenso verwendet wie Folien auf Basis von Weich-PVC. Folien auf Polyesterbasis, wie zum Beispiel Polyethylenterephthalat sind ebenfalls bekannt und eignen sich als Träger der Pigmentschicht.

Sodann können Teile der Pigmentschicht durch eine partiell aufgebrachte Passivierschicht deaktiviert sein, und zwar auf der Seite, die sich während des Markierprozesses mit dem Substrat in Kontakt befindet. Dadurch kann eine Markierung des Substrats schon von vornherein in bestimmten Bereichen verhindert werden. Die Passivierung kann beispielsweise in Gestalt einer Negativdarstellung der gewünschten Markierung erfolgen, so dass die Markierung selbst anschließend durch flächige Bestrahlung erfolgen kann.

Die Pigmentschicht beziehungsweise diese mit Trägerfolie und/oder Klebebeschichtung sowie allen weiteren Schichten kann im Sinne dieser Erfindung in Form aller flächigen Gebilde, beispielsweise in zwei Dimensionen ausgedehnter Folien oder Folienabschnitte, Bändern mit ausgedehnter Länge und begrenzter Breite, Bandabschnitten, Stanzlingen, Etiketten und dergleichen, vorliegen. Möglich ist auch die Wicklung einer vergleichsweise langen Pigmentschicht zu einer archimedischen Spirale, von der jeweils für den Einsatz ein Stück gewünschter Länge abgetrennt wird.

Mit der Pigmentschicht können Beschriftungen mit einer Auflösung in pm-Größenordnung erzielt werden. Weiter vorzugsweise ist die aufgebrachte Markierung ein Interferenzhologramm, da die Auflösungsqualität des Verfahrens Strukturen zur Lichtverstärkung und -auslöschung zulässt. Alternativ kann die Beschriftung auch in Form eines computergenerierten Hologramms erfolgen. Ein computergeneriertes Hologramm erlaubt durch Berechnung der Hologrammstruktur und Aufbringen dieser Struktur durch Laserbestrahlung eine Individualisierung der Kennzeichnung, die aufgrund ihrer Ausgestaltung nur schwer fälschbar ist und demzufolge einen hohen Fälschungsschutz bietet. Zudem können in eine derartige Struktur auf einfache Weise Informationen versteckt eingebracht werden.

Insbesondere bei Nutzung der Standardlaser, speziell der weitverbreiteten Nd-YAG-Festkörperlaser mit einer Wellenlänge von 1,06 µm, werden scharfe, kontrastreiche Beschriftungen und Kennzeichnungen erhalten.

Weiter vorzugsweise lässt sich die erfindungsgemäße Pigmentschicht in einem Verfahren zur Markierung eines Substrats, insbesondere von Glas, verwenden, wobei die Pigmentschicht durch Andrücken in direkten Kontakt mit dem zu beschriftenden Substrat gebracht wird und anschließend die Pigmentschicht mit energiereicher Strahlung, insbesondere einem Laser, bestrahlt wird. Durch die Bestrahlung wird die Polymermatrix pulverisiert, freier Kohlenstoff gebildet und in den bestrahlten Bereichen eine Markierung auf dem Substrat ausgebildet. Insbesondere die Beschriftung von Glas mittels der zuvor beschriebenen Pigmentschicht hat sich als besonders vorteilhaft erwiesen. Die Beschriftung kann mit relativ kurzen Belichtungszeiten erfolgen und wird dauerhaft mit dem Glas verbunden. Zudem kann die Beschriftung ohne sichtbare Beschädigung des Glases durchgeführt werden.

Durch den direkten Kontakt zwischen Pigmentschicht und Substrat wird ein Zwischenraum vermieden, der zu einer Vergrößerung des Reaktionsraums während der Laserbestrahlung führt. Dies hätte zur Folge, dass sich der Niederschlag auf dem Substrat über eine größere Oberfläche verteilen kann, so dass die Konturenschärfe der entstehenden Beschriftung geringer würde.

Insbesondere eignet sich dieses Verfahren zur Markierung transparenter Substrate, wie zum Beispiel Glas, da die Beschriftung durch das Substrat hindurch erfolgen kann. Die Strahlung durchdringt also das Substrat, bei einem entsprechenden Gebilde wie einem Röhrchen ggf. auch mehrere Schichten des Substrats, und interagiert mit der auf dem Substrat angeordneten Pigmentschicht, wodurch, wie zuvor beschrieben wurde, die Markierung auf der der Strahlungsquelle abgewandten Substratseite ausgebildet wird.

Gerade bei der Beschriftung von Glas werden alle Vorteile der erfindungsgemäßen Pigmentschicht genutzt: Die Markierung erfolgt äußerst widerstandsfähig. Es wird ein sehr gutes Beschriftungsergebnis erzielt. Es zeigt sich zudem eine überraschend geringe Schmauchbildung. Die Schriftzüge zeigten direkt nach der Beschriftung eine stark kontrastreiche Beschriftung. Über trockenes oder feuchtes Abwischen der Kennzeichnungsoberfläche kann der nicht fixierte Rückstand entfernt werden.

Bevorzugt erfolgt vor dem Aufbringen der Pigmentschicht eine Reinigung der zu beschriftenden Oberfläche. Weiterhin ist es vorteilhaft, wenn nach dem Applizieren der energiereichen Strahlung und somit der Markierung die Substratoberfläche von Rückständen gereinigt und/oder die nicht weiter benötigte Pigmentschicht entfernt wird. Besonders vorteilhaft ist es dabei, wenn die Pigmentschicht im Wesentlichen nur auf später zu beschriftende oder zu markierende Oberflächenbereiche aufgebracht wird.

Bevorzugt ist, wenn ein diodengepumpter Feststoffkörperlaser eingesetzt wird, die Pulsdauer des Lasers zwischen 40 und 90 ns liegt, die Ausgangsleistung 20 Watt beträgt und/oder die Beschriftungsgeschwindigkeit bei 250 mm/sec bis 750 mm/sec liegt, je nach Beschriftungsinhalten. Im Hinblick auf die fortschreitende Lasertechnologie sind jedoch auch noch kürzer Pulslängen denkbar, insbesondere bis hin zu Pulsdauern im Bereich der ps oder fs. Eine derartig kurze Pulsdauer ist insbesondere hinsichtlich kurzer Belichtungszyklen besonders vorteilhaft.

Im Falle des Zielsubstrates Glas ist die Durchstrahltechnik möglich, da die verwendete Wellenlänge von 1,064 µm für Glas durchlässig ist.

Die sich auf dem Glas einstellende Beschriftung hat eine Höhe von 0,25 µm bis 3,0 µm, je nach Beschriftungsinhalt und Parametrierung. Die Temperaturstabilität liegt nachgewiesenermaßen im Bereich von -50 °C bis 1200 °C. Die Tieftemperatur- und Hitzebeständigkeit ist aber deutlich höher. Die mechanische Beständigkeit gegenüber Abrieb ist extrem hoch (Crockmetertest > 1000 Hübe).

Die Beschriftung zeigt eine hohe Auflösungsgenauigkeit, je nach verwendeter Strahlqualität, die Linienbreite beträgt 70 µm bis 80 µm. Es sind beispielsweise maschinenlesbare 2D-Codes von 1,5 mm x 1,5 mm Kantenlänge mit einem Inhalt von 16 Zeichen darstellbar. Zudem können alle üblichen Kennzeichnungsinhalte wie Logos, Piktogramme, Zeichnungen, alphanumerische Zeichen, Sonderzeichen und Pixelgraphiken realisiert werden.

Schließlich umfasst die Erfindung auch einen Glaskörper, der unter Verwendung der erfindungsgemäßen Pigmentschicht markiert ist. Unter dem Begriff "Glaskörper" werden dabei alle Körper aus Glas, insbesondere Scheiben, Behältnisse oder Röhren, allgemein konvex oder konkav gebogenen Glasflächen subsumiert.

Die zuvor beschrieben Pigmentschicht sowie das entsprechende Beschriftungsverfahren eignen sich insbesondere für folgende Anwendungsfelder, in denen eine sichere Kennzeichnung von insbesondere Glasbehältern eine große Bedeutung hat:
- Biotechnologische, medizinische und pharmazeutische Primär-, Sekundär- und Tertiärverpackungsmittel aus Glas
- Verpackungsmittel aus Glas für Chemikalien, Hilfsmittel, Lebensmittel und Genussmittel
- Behältnisse und/oder Bauteile aus Glas für chirurgische, therapeutische und diagnostische Verfahren.
- Behältnisse und/oder Bauteile für industrielle und analytische Verfahren (Pipetten, pH-Meter etc.).
- Behältnisse und/oder Bauteile für biologische Verfahren, die aktives/inaktives Zellmaterial betreffen.

Im Folgenden ist anhand eines Beispiels die Zusammensetzung einer Polymerschicht näher erläutert, ohne in irgendeiner Form einschränkend zu wirken:

| Substrat | Anteil [phr] |
|---|---|
| EB 284 | 85,1 |
| HDDA | 5,0 |
| DVE 3 | 9,9 |
| Ruß | 0,4 |
| Titandioxid | 63,2 |
| **Gesamt Summe** | **163,6** |

| | |
|---|---|
| EB 284: | Aliphatisches, difunktionelles Polyurethanacrylat (Hersteller Cytec) |
| HGDDA: | Hexandioldiacrylat (Hersteller BASF |
| DVE-3: | Divinylether (Hersteller ISP oder BASF) |
| Ruß: | Furnaceruß mit einer Teilchengröße von 56 nm, Oberfläche 45 m²/g (Hersteller Evonik, Printex 25) |
| TiO₂: | (Hersteller Kronos, Kronos 2160) |

Die Zusammensetzung wird zu einer Schicht mit einer Dicke von 100 µm ausgestrichen.

Aus dem Ausstrich werden Stanzlinge mit den Maßen 30 x 50 mm hergestellt.

Schließlich wird anhand mehrerer Figuren die Verwendung der erfindungsgemäßen Polymerschicht zur Beschriftung eines Glaskörpers in einer vorteilhaften Ausführungsform näher erläutert, ohne damit die Erfindung unnötig einschränken zu wollen. Es zeigen
- Figur 1: die Beschriftung eines Glaskörpers mittels eines Lasers in der Durchstrahltechnik unter Verwendung der erfindungsgemäßen Pigmentschicht,
- Figur 2: den Vorgang der Pulverisierung und nachfolgender Verdampfung der Polymermatrix der Pigmentschicht im Auftreffpunkt des Lasers und
- Figur 3: die Bildung der Beschriftung auf dem Glaskörper durch Titancarbid.

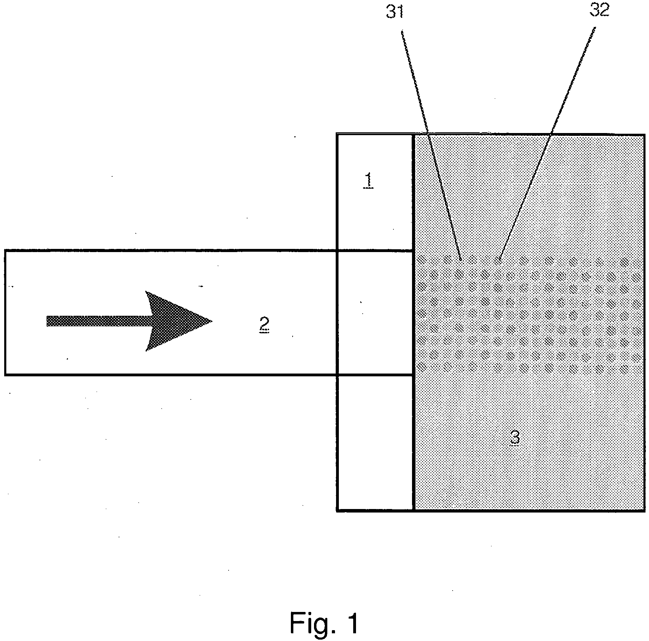

In der Figur 1 ist die Beschriftung eines Glaskörpers 1 mittels eines Lasers, der einen Laserstahl 2 aussendet, in der Durchstrahltechnik unter Verwendung der erfindungsgemäßen Pigmentschicht 3 gezeigt.

Verwendet wird ein Nd:YAG-Laser mit einer Wellenlänge von 1,064 µm, die für den Glaskörper 1 durchlässig ist. Der Laserstrahl 2 geht somit durch den Glaskörper 1 hindurch und trifft auf die Pigmentschicht 3, die in direktem Kontakt mit dem Glaskörper 1 steht. Die Pigmentschicht 3 besteht aus einer Polymermatrix, in der Titandioxid 31 und Ruß 32 eingemischt sind.

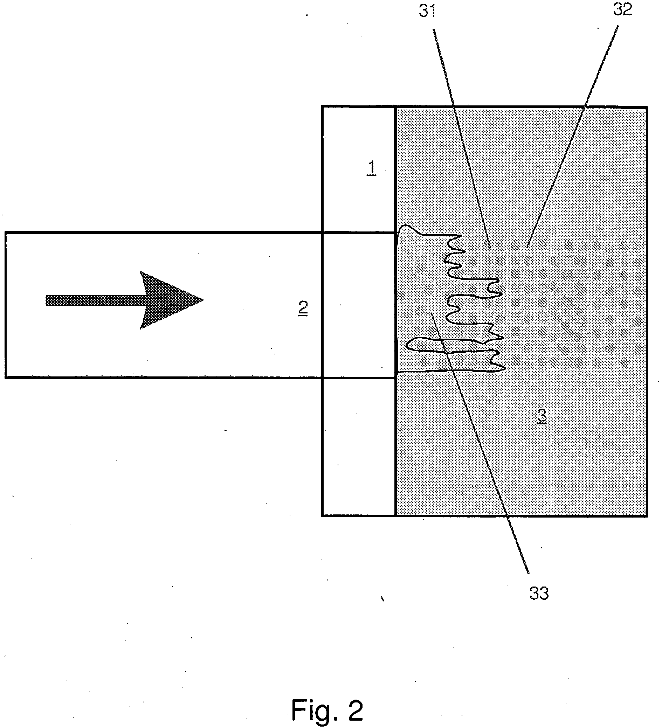

In der Figur 2 ist der Vorgang der Verdampfung mit vorheriger Pulverisierung der Polymermatrix der Pigmentschicht 3 im Auftreffpunkt des Lasers gezeigt. Durch das Auftreffen des Laserlichts 2 auf die Pigmentschicht 3 wird das Laserlicht 2 in Wärme umgewandelt, welche sich auf die Oberfläche der Pigmentschicht 3 auswirkt. Dabei wird die Polymermatrix durch Absorption des Laserlichts 2 lokal in ein Plasma 33, auch Plasmawolke genannt, überführt.

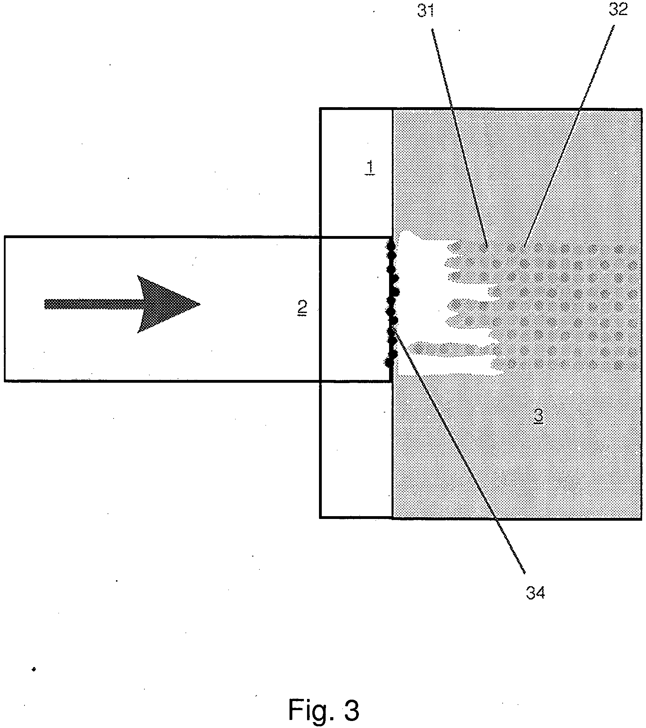

Durch die Ausbildung des Plasmas 33 findet eine Reaktion zwischen dem Titandioxid 31 und dem Ruß 32 zu Titancarbid 34 statt, das sich, wie in Figur 3 dargestellt, auf der Oberfläche des Glaskörpers 1 niederschlägt.

## Patentansprüche

1. Pigmentschicht (3) zur dauerhaften Markierung (34) eines Substrats (1), insbesondere von Glas (1), basierend auf einer Polymermatrix, welche auf energiereiche Strahlung (2), insbesondere eine Laserbestrahlung (2), überwiegend mit Pulverisierung reagiert,
**dadurch gekennzeichnet,**
**dass** die Pigmentschicht (3) als Bestandteile einen Titanspender (31) sowie einen unter Energieeinstrahlung freien Kohlenstoff bereitstellenden Kohlenstoffspender (32) aufweist.

2. Pigmentschicht (3) nach Anspruch 1, **dadurch gekennzeichnet,**
**dass** diese frei von unter Energieeinstrahlung schmelzenden Kunststoffen und/oder frei von einer Glasfritte ausgebildet ist.

3. Pigmentschicht (3) nach Anspruch 1 oder 2, **dadurch gekennzeichnet,**
**dass** als Titanspender (31) Titandioxid (31) vorgesehen ist.

4. Pigmentschicht (3) nach einem der vorherigen Ansprüche, **dadurch gekennzeichnet,**
**dass** als Kohlenstoffspender (32) Ruß (32) und/oder die Polymermatrix vorgesehen ist, wobei der freie Kohlenstoff durch Bestrahlung (2) des Ruß (32) gebildet wird und/oder aus der unter Strahlungseinwirkung (2) zersetzten, verdampften, oxydierten, depolymerisierten und/oder pyrolysierten Polymermatrix stammt, vorzugsweise, dass als Kohlenstoffspender (32) ausschließlich Ruß (32) und/oder die Polymermatrix vorgesehen ist.

5. Pigmentschicht (3) nach einem der vorherigen Ansprüche, **dadurch gekennzeichnet,**
**dass** die Polymermatrix eine strahlengehärtete Polymermatrix ist.

6. Pigmentschicht (3) nach einem der vorherigen Ansprüche, **dadurch gekennzeichnet,**
**dass** die Polymermatrix eine duroplastische Polymermatrix ist.

7. Pigmentschicht (3) nach einem der vorherigen Ansprüche, **dadurch gekennzeichnet,**
**dass** die Pigmentschicht (3) die folgende Zusammensetzung aufweist:
| | |
|---|---|
| 100 phr | Polymermatrix, insbesondere ein strahlengehärteter aliphatischer, difunktioneller Polyurethanacrylat, |
| 0,2 phr bis 2,5 phr | Ruß (32) und |
| 45 phr bis 65 phr | Titandioxid (31). |

8. Pigmentschicht (3) nach einem der vorherigen Ansprüche, **dadurch gekennzeichnet,**
**dass** die Dicke der Pigmentschicht (3) In einem Bereich von etwa 20 µm bis etwa 500 µm liegt.

9. Pigmentschicht (3) nach einem der vorherigen Ansprüche, **dadurch gekennzeichnet,**
**dass** der mittels Energieeinstrahlung (2) erzeugte pulverisierte Abbrand der Pigmentschicht eine zahlenmittlere Teilchengröße von etwa 0,6 µm bis etwa 2,0 µm aufweist.

10. Pigmentschicht (3) nach einem der vorherigen Ansprüche, **dadurch gekennzeichnet,**
**dass** die Pigmentschicht (3) partiell oder vollflächig mit einer, insbesondere druckempfindlichen, Klebemasse beschichtet ist.

11. Pigmentschicht (3) nach einem der vorherigen Ansprüche, **dadurch gekennzeichnet,**
**dass** die Pigmentschicht (3) auf einem Träger, vorzugsweise auf einer Trägerfolie, aufgebracht ist.

12. Pigmentschicht (3) nach einem der vorherigen Ansprüche, **dadurch gekennzeichnet,**
**dass** die Pigmentschicht (3) durch eine partiell aufgebrachte Passivierschicht deaktiviert ist, wobei die Passivierung auf der Seite der Pigmentschicht (3) erfolgt ist, die sich während des Markierprozesses mit dem Substrat (1) in Kontakt befindet.

13. Verwendung einer Pigmentschicht (3) nach mindestens einem der vorhergehenden Ansprüche zur Markierung von Glas (1).

14. Verwendung nach Anspruch 13, **dadurch gekennzeichnet,**
**dass** die aufgebrachte Markierung (34) ein computergeneriertes Hologramm oder ein Interferenzhologramm ist.

15. Verfahren zur Markierung eines Substrats,
bei dem eine Pigmentschicht (3) durch Andrücken in direkten Kontakt mit dem zu beschriftenden Substrat (1) gebracht wird, wobei die Pigmentschicht (3) gemäß einem der vorstehenden Ansprüche ausgebildet ist,
bei dem die Pigmentschicht (3) mit energiereicher Strahlung (2) bestrahlt wird, wodurch die Polymermatrix pulverisiert und freier Kohlenstoff gebildet wird und
bei dem durch die Bestrahlung (2) eine Markierung (34) auf dem Substrat (1) ausgebildet wird.

16. Verfahren nach Anspruch 15, **dadurch gekennzeichnet,**
**dass** die Markierung (34) unter Ausschluss einer Glasfritte und/oder unter Ausschluss eines unter Energieeinstrahlung schmelzenden Kunststoffes durchgeführt wird.

17. Verfahren nach Anspruch 15 oder 16, **dadurch gekennzeichnet,**
**dass** ein transparentes Substrat (1), insbesondere Glas (1) markiert wird, wobei die Bestrahlung (2) durch das Substrat (1) hindurch erfolgt und die Markierung (34) auf der der Strahlungsquelle abgewandten Substratseite ausgebildet wird.

18. Verfahren nach einem der Ansprüche 15 bis 17, **dadurch gekennzeichnet,**
**dass** die Bestrahlung (2) mittels eines Lasers als Strahlungsquelle durchgeführt wird.

19. Verfahren nach einem der Ansprüche 15 bis 18, **dadurch gekennzeichnet,**
**dass** die Bestrahlung (2) mit einer Pulsdauer kleiner 90 ns durchgeführt wird.

20. Glaskörper (1), insbesondere Scheiben, Behältnisse oder Röhren, der unter Verwendung einer Pigmentschicht (3) gemäß einem der vorherigen Ansprüche markiert ist.

21. Glaskörper (1) nach Anspruch 20, **dadurch gekennzeichnet,**
**dass** er an seiner Oberfläche Titancarbid (34) aufweist.

## Claims

1. Pigment layer (3) intended for the permanent marking (34) of a substrate (1), more particularly of glass (1), based on a polymer matrix which reacts predominantly with pulverization to high-energy radiation (2), more particularly to laser irradiation (2),
**characterized**
**in that** the pigment layer (3) comprises as constituents a titanium donor (31) and also a carbon donor (32) which provides free carbon under energy irradiation.

2. Pigment layer (3) according to Claim 1, **characterized in that** it is formed free from plastics which melt under energy irradiation and/or free from a glass frit.

3. Pigment layer (3) according to Claim 1 or 2, **characterized in that** titanium dioxide (31) is provided as titanium donor (31).

4. Pigment layer (3) according to any of the preceding claims, **characterized in that** carbon black (32) and/or the polymer matrix are/is provided as carbon donor(s) (32), the free carbon being formed by irradiation (2) of the carbon black (32) and/or originating from the polymer matrix decomposed, evaporated, oxidized, depolymerized and/or pyrolysed under exposure to radiation (2),
preferably **in that** exclusively carbon black (32) and/or the polymer matrix are/is provided as carbon donor(s) (32).

5. Pigment layer (3) according to any one of the preceding claims, **characterized in that** the polymer matrix is a radiation-cured polymer matrix.

6. Pigment layer (3) according to any one of the preceding claims, **characterized in that** the polymer matrix is a thermoset polymer matrix.

7. Pigment layer (3) according to any one of the preceding claims, **characterized in that** the pigment layer (3) has the following composition:
| | |
|---|---|
| 100 phr | polymer matrix, more particularly a radiation-cured aliphatic, difunctional polyurethane acrylate, |
| 0.2 phr to 2.5 phr | carbon black (32) and |
| 45 phr to 65 phr | titanium dioxide (31). |

8. Pigment layer (3) according to any one of the preceding claims, **characterized in that** the thickness of the pigment layer (3) lies in a range from about 20 µm to about 500 µm.

9. Pigment layer (3) according to any one of the preceding claims, **characterized in that** the pulverized material removed from the pigment layer by means of energy irradiation (2) has a number-average particle size of about 0.5 µm to about 2.0 µm.

10. Pigment layer (3) according to any one of the preceding claims, **characterized in that** the pigment layer (3) is coated partially or over its whole area with an adhesive, more particularly a pressure-sensitive adhesive.

11. Pigment layer (3) according to any one of the preceding claims, **characterized in that** the pigment layer (3) is applied on a carrier, preferably on a carrier sheet.

12. Pigment layer (3) according to any one of the preceding claims, **characterized in that** the pigment layer (3) is deactivated as a result of a partially applied passivating layer, the passivation being on the side of the pigment layer (3) that, during the marking operation, is in contact with the substrate (1).

13. Use of a pigment layer (3) according to at least one of the preceding claims for marking glass (1).

14. Use according to Claim 13, **characterized in that** the applied marking (34) is a computer-generated hologram or an interference hologram.

15. Method of marking a substrate, wherein a pigment layer (3) is brought by pressing into direct contact with the substrate (1) to be scribed, the pigment layer (3) being formed according to any one of the preceding claims,
wherein the pigment layer (3) is irradiated with high-energy radiation (2), as a result of which the polymer matrix is pulverized and free carbon is formed, and
wherein, as a result of the irradiation (2), a marking (34) is formed on the substrate (1).

16. Method according to Claim 15, **characterized in that** the marking (34) is carried out with exclusion of a glass frit and/or with exclusion of a plastic which melts under energy irradiation.

17. Method according to Claim 15 or 16, **characterized in that** a transparent substrate (1), more particularly glass (1), is marked, the irradiation (2) taking place through the substrate (1) and the marking (34) being formed on the side of the substrate that is remote from the radiation source.

18. Method according to any one of Claims 15 to 17, **characterized in that** the irradiation (2) is carried out by means of a laser as radiation source.

19. Method according to any one of Claims 15 to 18, **characterized in that** the irradiation (2) is carried out with a pulse duration of less than 90 ns.

20. Glass article (1), more particularly sheets, containers or tubes, marked using a pigment layer (3) according to any one of the preceding claims.

21. Glass article (1) according to Claim 20, **characterized in that** it has titanium carbide (34) on its surface.

## Revendications

1. Couche pigmentée (3) permettant le marquage permanent (34) d'un substrat (1), en particulier de verre (1), basée sur une matrice polymère qui réagit principalement par pulvérisation sous l'action d'un rayonnement (2) riche en énergie, en particulier d'un rayonnement laser (2),
**caractérisée en ce que**
la couche pigmentée (3) présente comme composants un donneur de titane (31) ainsi qu'un donneur de carbone (32) qui délivre du carbone libre sous l'action d'un rayonnement énergétique.

2. Couche pigmentée (3) selon la revendication 1, **caractérisée en ce qu'**elle est dépourvue de matières synthétiques qui fondent sous l'action du rayonnement énergétique et/ou **en ce qu'**elle est exempte de verre fritté.

3. Couche pigmentée (3) selon les revendications 1 ou 2, **caractérisée en ce que** du dioxyde de titane (31) est prévu comme donneur de titane (31).

4. Couche pigmentée (3) selon l'une des revendications précédentes, **caractérisée en ce que** du noir de carbone (32) et/ou la matrice polymère sont prévus comme donneurs de carbone (32), le carbone libre étant formé par irradiation (2) du noir de carbone (32) et/ou provenant de la matrice polymère qui se décompose, se vaporise, s'oxyde, se dépolymérise et/ou se pyrolyse sous l'effet (2) du rayonnement, et de préférence **en ce que** seul du noir de carbone (32) et/ou la matrice polymère sont prévus comme donneur de carbone (32).

5. Couche pigmentée (3) selon l'une des revendications précédentes, **caractérisée en ce que** la matrice polymère est une matrice polymère durcie par rayonnement.

6. Couche pigmentée (3) selon l'une des revendications précédentes, **caractérisée en ce que** la matrice polymère est une matrice polymère thermodurcissable.

7. Couche pigmentée (3) selon l'une des revendications précédentes, **caractérisée en ce que** la couche pigmentée (3) présente la composition suivante :
| | |
|---|---|
| 100 phr | matrice polymère, en particulier poly(acrylate d'uréthane) bifonctionnel aliphatique durci par rayonnement, |
| 0,2 phr à 2,5 phr | noir de carbone (32) et |
| 45 phr à 65 phr | dioxyde de titane (31). |

8. Couche pigmentée (3) selon l'une des revendications précédentes, **caractérisée en ce que** l'épaisseur de la couche pigmentée (3) est de l'ordre d'environ 20 µm à environ 500 µm.

9. Couche pigmentée (3) selon l'une des revendications précédentes, **caractérisée en ce que** le produit de combustion pulvérisé de la couche pigmentée formée au moyen du rayonnement énergétique (2) présente une granulométrie moyenne en nombre d'environ 0,5 µm à environ 2,0 µm.

10. Couche pigmentée (3) selon l'une des revendications précédentes, **caractérisée en ce que** la couche pigmentée (3) est revêtue en partie ou sur toute sa surface par une pâte adhésive en particulier une pâte adhésive sensible à la pression.

11. Couche pigmentée (3) selon l'une des revendications précédentes, **caractérisée en ce que** la couche pigmentée (3) est appliquée sur un support, en particulier sur une feuille de support.

12. Couche pigmentée (3) selon l'une des revendications précédentes, **caractérisée en ce que** la couche pigmentée (3) est désactivée par l'application partielle d'une couche de passivation, la passivation s'effectuant sur le côté de la couche pigmentée (3) qui est en contact avec le substrat (1) pendant l'opération de marquage.

13. Utilisation d'une couche pigmentée (3) selon au moins l'une des revendications précédentes comme marquage de verre (1).

14. Utilisation selon la revendication 13, **caractérisée en ce que** le marquage (34) appliqué est un hologramme ou un hologramme à interférence produit par ordinateur.

15. Procédé de marquage d'un substrat, dans lequel une couche pigmentée (3) est mise par poussée en contact direct avec le substrat (1) à inscrire, la couche pigmentée (3) étant formée selon l'une des revendications précédentes, et dans lequel la couche pigmentée (3) est irradiée par un rayonnement (2) riche en énergie, suite à quoi la matrice polymère est pulvérisée et du carbone libre est formé, et dans lequel un marquage (34) est formé sur le substrat (1) par le rayonnement (2).

16. Procédé selon la revendication 15, **caractérisé en ce que** le marquage (34) est réalisé sans intervention de verre fritté et/ou d'une matière synthétique fondant sous l'action du rayonnement riche en énergie.

17. Procédé selon les revendications 15 ou 16, **caractérisé en ce qu'**un substrat transparent (1) et en particulier un verre (1) est marqué, l'irradiation (2) s'effectuant à travers le substrat (1) et le marquage (34) étant formé sur le côté du substrat non tourné vers la source de rayonnement.

18. Procédé selon l'une des revendications 15 à 17, **caractérisé en ce que** l'irradiation (2) est réalisée au moyen d'un laser servant de source de rayonnement.

19. Procédé selon l'une des revendications 15 à 18, **caractérisé en ce que** l'irradiation (2) est réalisée à une durée d'impulsions inférieures à 90 ns.

20. Corps (1) en verre, en particulier vitre, récipient ou tube, marqué par recours à une couche pigmentée (3) selon l'une des revendications précédentes.

21. Corps (1) en verre selon la revendication 20, **caractérisé en ce qu'**il présente du carbure de titane (34) sur sa surface.
